# FASCICULE DE BREVET EUROPEEN

(11) **EP 3 303 082 B1**
(45) Date de publication et mention de la délivrance du brevet: **23.01.2019**
(21) Numéro de dépôt: 16741976.1
(22) Date de dépôt: 03.06.2016
(51) Int. Cl.: B60T 13/66, B60T 17/22, F16D 55/224

(54) **SYSTÈME DE FREINAGE FERROVIAIRE POUR VÉHICULE FERROVIAIRE**
SCHIENENBREMSSYSTEM FÜR EIN SCHIENENFAHRZEUG
RAILWAY BRAKING SYSTEM FOR A RAILWAY VEHICLE

(30) Priorité: 05.06.2015 FR 1555131
(43) Date de publication de la demande: 11.04.2018
(73) Titulaire: Faiveley Transport Amiens, 80000 Amiens (FR)
(72) Inventeur: THOMAS, Didier, 80300 Millencourt (FR); CROSNIER, Guillaume, 80170 Rosieres En Santerre (FR)
(74) Mandataire: Santarelli
(86) Numéro de dépôt international: PCT/FR2016/051331
(87) Numéro de publication internationale: WO 2016/193639

(56) Documents cités:
- EP-A1- 0 186 767
- EP-A1- 2 154 040
- DE-A1- 19 850 560
- US-A- 4 918 922

## Description

### DOMAINE DE L'INVENTION

L'invention concerne le domaine du freinage des véhicules ferroviaires et plus particulièrement les systèmes de freinage ferroviaires pour véhicule ferroviaire pourvus d'un frein de service et/ou de parking configuré pour agir sur une timonerie de freinage.

### ARRIERE PLAN TECHNOLOGIQUE

Les véhicules ferroviaires sont généralement équipés d'étriers de frein de service et/ou de parking pourvus d'un cylindre de frein de service et/ou de parking.

Ce cylindre comporte un piston de freinage mobile d'une part, sous l'effet de l'action d'un ou plusieurs ressorts et d'autre part, sous l'effet d'un fluide sous pression.

Le déplacement du piston de freinage sous l'effet des ressorts entraîne une action de freinage telle que le serrage d'un disque de frein entre deux garnitures, ou la pression directe d'une semelle contre une roue du véhicule.

Au contraire, le déplacement du piston de freinage sous l'effet du fluide sous pression entraîne une action inverse au freinage, à savoir le desserrage du disque de frein ou le retrait de la semelle ; et permet ainsi le retrait du frein.

Plus précisément, ce type de cylindre de freinage comporte un corps dans lequel et par rapport auquel le piston de freinage est mobile pour agir sur la timonerie de freinage par l'intermédiaire d'une tige de poussée.

Le cylindre de frein comporte également une cavité ménagée dans le corps et prévue pour recevoir les ressorts, lequel est configuré pour mettre le piston de freinage dans une position de freinage, par l'intermédiaire par exemple d'un flasque d'appui coopérant à la fois avec le ressort et le piston de freinage.

Le cylindre de frein comporte en outre une chambre de pression délimitée notamment par le piston de freinage et par le corps, et qui est raccordée par un premier conduit à une première source d'agent de pression pour ramener le piston dans une position de repos où le frein est armé mais non appliqué.

Pour armer le frein, la chambre de pression est alimentée en agent de pression, aussi appelé fluide sous pression, via la source correspondante de sorte à déplacer le piston de freinage dans le corps.

Le déplacement du piston de freinage vers sa position de repos entraîne le déplacement du flasque d'appui à l'encontre de la force du ressort, qui se comprime.

Le cylindre de frein est en outre pourvu d'un piston de secours qui est mobile par rapport au corps de cylindre.

Ce piston de secours est adjacent au piston de freinage et délimite avec celui-ci la chambre de pression.

Plus précisément, le piston de freinage présente une tête et une tige et le piston de secours est formé d'un corps monté sur la tige et en regard de la tête du piston de freinage.

Le cylindre de frein comporte en outre une chambre de secours délimitée par le piston de secours et par le corps, et qui est raccordée par un deuxième conduit à une deuxième source d'agent de pression, de sorte à déplacer le piston de secours pour pousser et ramener le piston de freinage dans sa position de repos où le frein est armé mais non appliqué.

Le cylindre de frein est pourvu d'un premier joint d'étanchéité disposé entre la tête du piston de freinage et le corps du cylindre, d'un deuxième joint d'étanchéité disposé entre le corps du piston de secours et la tige du piston de freinage, d'un troisième joint d'étanchéité disposé entre le corps du piston de secours et le corps du cylindre, et d'un quatrième joint d'étanchéité disposé entre la tige du piston de freinage et le corps du cylindre.

EP 2 154 040 A1 divulgue un actionneur de frein de parking ou de secours pour frein à déverrouillage à billes.

En cas de défaut de fuites en particulier dû au caractère défectueux du premier joint d'étanchéité, le réarmement du frein est assuré par l'alimentation de la chambre de secours en agent de pression via la source correspondante ; de sorte à déplacer le piston de secours qui pousse et déplace le piston de freinage dans le corps jusqu'à sa position de repos.

### OBJET DE L'INVENTION

L'invention concerne un système de freinage pour véhicule ferroviaire, présentant, notamment en termes de sûreté, des performances améliorées par rapport au système de freinage de l'art antérieur susmentionné, tout en étant simple, commode et économique.

L'invention a ainsi pour objet un système de freinage ferroviaire pour véhicule ferroviaire à organes de freinage à au moins une garniture ou à au moins une semelle, comportant une timonerie de freinage configurée pour agir sur au moins un dit organe de freinage, et un dispositif de freinage de service et/ou de parking pourvu d'un corps et d'un actionneur mobile par rapport audit corps pour agir sur ladite timonerie de freinage ; ledit système de freinage ferroviaire étant caractérisé en ce que ledit actionneur comporte un unique piston de freinage présentant un premier tronçon ayant une première section et un deuxième tronçon ayant une deuxième section supérieure à ladite première section, ledit piston de freinage délimitant avec ledit corps une unique chambre de pression configurée pour être alimentée par au moins une source d'agent de pression pour mettre ledit piston de freinage dans une position de repos dans laquelle ladite timonerie de freinage n'applique aucun effort sur ledit au moins un organe de freinage, grâce à quoi ledit dispositif de freinage n'est pas appliqué ; ledit système de freinage ferroviaire comportant en outre un premier joint d'étanchéité logé entre ledit premier tronçon dudit piston de freinage et ledit corps, un deuxième joint d'étanchéité, distinct dudit premier joint d'étanchéité, logé également entre ledit premier tronçon dudit piston de freinage et ledit corps, un troisième joint d'étanchéité logé entre ledit deuxième tronçon dudit piston de freinage et ledit corps, et un quatrième joint d'étanchéité, distinct dudit troisième joint d'étanchéité, logé également entre ledit deuxième tronçon dudit piston de freinage et ledit corps ; lesdits premier et troisième joints d'étanchéité étant configurés pour former une étanchéité primaire de ladite chambre de pression et lesdits deuxième et quatrième joints d'étanchéité étant configurés pour former une étanchéité secondaire de ladite chambre de pression.

Dans le système de freinage selon l'invention, le piston de freinage est l'unique piston qui permet de réarmer le dispositif de freinage. La chambre de pression est également l'unique chambre de pression qui est alimentée pour permettre l'actionnement de l'unique piston de freinage.

Le système de freinage selon l'invention est ainsi pourvu d'un cylindre de frein dit à simple chambre de pression et à double étanchéité de cette unique chambre de pression.

Grâce à sa configuration et en particulier au fait de disposer, sur un même et unique piston de freinage et dans une même et unique chambre de pression, d'une étanchéité primaire et au surplus d'une étanchéité secondaire, dite aussi étanchéité de secours, le système permet de pallier aux éventuels défauts de fuites des premier et troisième joints formant l'étanchéité primaire.

Cette configuration permet en outre de simplifier mécaniquement le cylindre de frein en ne disposant que d'un unique piston de freinage, tout en ayant un système particulièrement sûr grâce à la double étanchéité.

En effet, avoir un unique piston de freinage permet de s'affranchir d'éventuels problèmes de guidage entre plusieurs pistons coaxiaux et/ou d'arc-boutement.

Le fait d'avoir un unique piston de freinage permet en outre de rendre particulièrement compact le système de freinage ferroviaire.

Le système selon l'invention permet par conséquent d'obtenir un niveau de sûreté au moins égal voire supérieur à celui obtenu avec le système de freinage de l'art antérieur susmentionné, de manière simple, commode et économique.

Selon des caractéristiques préférées, simples, commodes et économiques du système selon l'invention :
- ledit dispositif de freinage est en outre pourvu d'un organe ressort logé dans une cavité ménagée dans ledit corps et d'un flasque d'appui assujetti mécaniquement à la fois audit organe ressort et audit piston de freinage ; ledit organe ressort étant configuré pour mettre, sans sollicitation extérieure et par l'intermédiaire dudit flasque d'appui, ledit piston de freinage dans une position de freinage dans laquelle ladite timonerie de freinage applique un effort sur ledit au moins un organe de freinage, grâce à quoi ledit dispositif de freinage est appliqué ;
- ledit premier tronçon dudit piston de freinage s'étend sensiblement longitudinalement dans ledit corps et est assujetti mécaniquement à ladite timonerie de freinage, et ledit piston de freinage comporte en outre une portion de jonction raccordant ledit premier tronçon audit deuxième tronçon, lequel deuxième tronçon s'étend sensiblement en regard dudit premier tronçon de sorte à former une gorge annulaire entre ledit premier tronçon et ledit deuxième tronçon, ladite gorge annulaire ayant un fond formé par ladite portion de jonction ;
- au moins un des premier et deuxième joints d'étanchéité est logé au niveau de la gorge annulaire et/ou en regard dudit deuxième tronçon ;
- ledit dispositif de freinage est configuré de sorte qu'au moins un desdits troisième et quatrième joints d'étanchéité se trouve au moins partiellement en superposition par rapport audit au moins un des premier et deuxième joints d'étanchéité qui est logé au niveau de la gorge annulaire, au moins lorsque ledit piston de freinage est en position de repos ;
- lesdits premier et troisième joints d'étanchéité sont agencés de sorte à être au moins partiellement en superposition l'un par rapport à l'autre et lesdits deuxième et quatrième joints d'étanchéité sont agencés pour être décalés longitudinalement l'un par rapport à l'autre ;
- ledit quatrième joint d'étanchéité est adjacent audit troisième joint d'étanchéité et logé d'un premier côté dirigé vers ladite portion de jonction, tandis que ledit deuxième joint d'étanchéité est adjacent audit premier joint d'étanchéité et logé d'un deuxième côté opposé audit premier côté ;
- lesdits premier et troisième joints d'étanchéité sont similaires et appartiennent à une première famille de joints, lesdits deuxième et quatrième joints d'étanchéité sont similaires et appartiennent à une deuxième famille de joints, distincte ou identique à ladite première famille de joints ;
- lesdites première et deuxième familles de joints sont de préférence choisies parmi celles des joints composites, des joints à lèvre, des joints toriques, des joints à lobes et des joints dits compacts ;
- au moins un desdits premier, deuxième, troisième et quatrième joints d'étanchéité est situé dans un logement ménagé dans ledit corps dudit dispositif de freinage ;
- au moins un desdits premier et deuxième joints d'étanchéité est situé dans un logement ménagé dans ledit premier tronçon dudit piston de freinage, et/ou au moins un desdits troisième et quatrième joints d'étanchéité est situé dans un logement ménagé dans ledit deuxième tronçon dudit piston de freinage ;
- ledit système comporte au moins un premier segment de guidage disposé entre ledit premier tronçon et ledit corps, et logé dans une cavité ménagée dans ledit premier tronçon ou dans ledit corps ; et au moins un deuxième segment de guidage disposé entre ledit deuxième tronçon et ledit corps, et logé dans une cavité ménagée dans ledit deuxième tronçon ou dans ledit corps ;
- ledit corps est pourvu d'un unique conduit d'alimentation débouchant dans ladite chambre de pression, et ledit système de freinage comporte en outre une première source d'agent de pression hydraulique et une seconde source d'agent de pression hydraulique qui sont configurées chacune pour alimenter ladite chambre de pression par l'intermédiaire dudit conduit d'alimentation ;
- ledit système comporte en outre un réseau d'alimentation en agent de pression hydraulique, comportant un unique circuit de distribution et une unique conduite de distribution raccordée par une première extrémité audit circuit de distribution et par une deuxième extrémité, opposée à ladite une première extrémité, audit conduit d'alimentation dudit corps ; ledit réseau d'alimentation comportant en outre une branche primaire configurée pour faire cheminer un agent de pression hydraulique provenant de ladite première source d'agent de pression et pourvue d'un dispositif de régulation de pression, un premier dispositif de distribution hydraulique disposé dans ledit circuit de distribution et raccordé à ladite branche primaire, une branche secondaire configurée pour faire cheminer un agent de pression hydraulique provenant de ladite deuxième source d'agent de pression, un deuxième dispositif de distribution hydraulique disposé dans ledit circuit de distribution et raccordé à ladite branche secondaire ; avec ledit premier dispositif de distribution hydraulique qui est disposé entre ledit deuxième dispositif de distribution hydraulique et ledit dispositif de régulation de pression ;
- lesdits premier et deuxième dispositifs de distribution hydraulique sont formés chacun par un distributeur pourvu de trois orifices et d'un tiroir à deux positions qui est commandé électriquement par un actionneur ; et/ou
- ladite branche principale et/ou ladite branche secondaire sont alimentées chacune en agent de pression hydraulique par un accumulateur hydraulique ou par une pompe hydraulique.

### BREVE DESCRIPTION DES DESSINS

On va maintenant poursuivre l'exposé de l'invention par la description d'exemples de réalisation, donnée ci-après à titre illustratif et non limitatif, en référence aux dessins annexés sur lesquels :
- les figures 1 à 6 illustrent schématiquement un système de freinage ferroviaire conforme à l'invention, dans différentes configurations de fonctionnement ; et
- la figure 7 représente schématiquement une variante de réalisation du système visible sur les figures 1 à 6.

### DESCRIPTION DETAILLEE D'UN EXEMPLE DE REALISATION

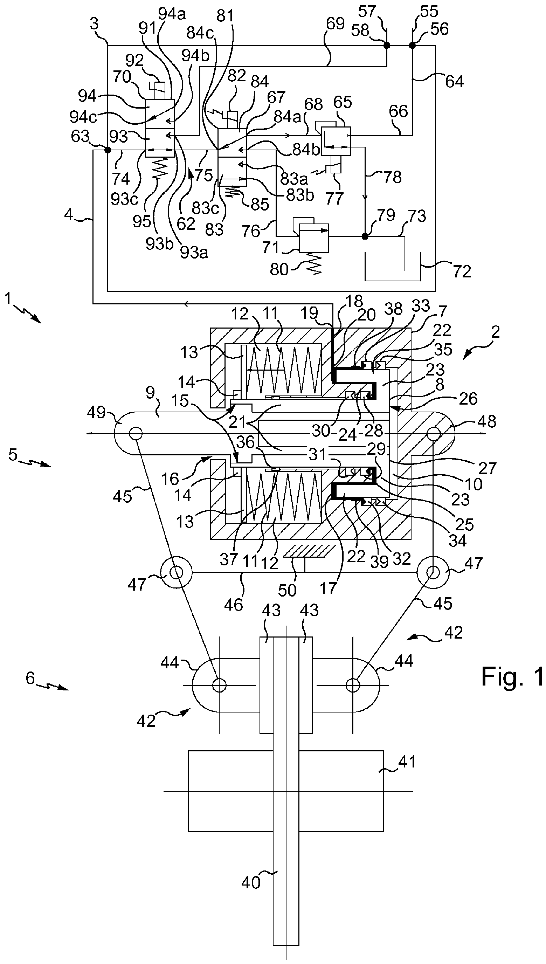

Les figures 1 à 6 représentent schématiquement un système de freinage ferroviaire 1 pour un véhicule ferroviaire (non représenté), dans différentes configurations de fonctionnement.

Plus précisément, les configurations de fonctionnement dans lesquelles sont illustrées le système de freinage ferroviaire 1 sur les figures 1 à 6 sont représentatives respectivement d'une configuration de freinage de service, d'une configuration de roulage normal, d'une configuration de roulage avec défaut d'étanchéité, d'une configuration de freinage d'urgence, d'une configuration de roulage avec défaut de la première source d'agent de pression hydraulique, et d'une configuration de roulage avec défaut de la première source d'agent de pression hydraulique et défaut d'étanchéité.

Le système de freinage ferroviaire 1 comporte un dispositif de freinage de service et/ou de parking 2 (ci-après frein) pourvu d'un corps 7 formant ici un cylindre de frein de service et/ou parking, un réseau d'alimentation en agent(s) de pression hydraulique(s) 3 connecté(s) au corps 7 par l'intermédiaire d'une unique conduite de distribution 4, une timonerie de freinage 5 reliée mécaniquement au corps 2 ainsi qu'un organe de freinage 6 à garnitures sur lequel la timonerie de freinage 5 est configurée pour agir.

Le corps 7 présente ici la forme d'une enveloppe globalement fermée.

Le frein 2 comporte un actionneur qui est ici formé par un unique piston de freinage 8 logé dans une première cavité 10 ménagée dans le corps 7.

Ce piston de freinage 8 est mobile par rapport au corps 7, dans la première cavité 10, selon une première direction axiale.

Le frein 2 comporte en outre une tige de poussée 9 montée au moins partiellement mobile suivant la première direction axiale dans la première cavité 10 et par rapport au corps 7.

La tige de poussée 9 est assujettie mécaniquement au piston de freinage 8 de sorte que lorsque ce dernier est déplacé suivant la première direction axiale, la tige de poussée 9 est aussi déplacée.

Le frein 2 est en outre pourvu d'un organe ressort 11 logé dans une deuxième cavité 12 ménagée dans le corps 7 et d'un flasque d'appui 13 assujetti mécaniquement à la fois à l'organe ressort 11 et au piston de freinage 8.

L'organe ressort 11 peut être formé par un ou plusieurs ressorts de compression et le flasque d'appui 13 peut présenter la forme par exemple d'une coupe dans laquelle se loge au moins partiellement l'organe ressort 11.

Le flasque d'appui 13 est assujetti mécaniquement à une première extrémité 15 du piston de freinage 8 par l'intermédiaire d'une interface de liaison mécanique 14, qui peut par exemple être formée par un système à dentures.

L'organe ressort 11 est configuré pour mettre, sans sollicitation extérieure et par l'intermédiaire du flasque d'appui 13 et de l'interface 14, le piston de freinage 8 dans une position de freinage dans laquelle la timonerie de freinage 5 applique un effort sur l'organe de freinage à garnitures 6, grâce à quoi le frein 2 est appliqué.

La tige de poussée 9 est pourvue d'un régleur d'usure (non représenté) configuré pour compenser l'usure des garnitures de l'organe de freinage 6 afin d'éviter qu'un jeu trop important (consécutif à l'usure des garnitures) ne réduise l'effort de freinage.

Le corps 7 est en outre pourvu d'un premier orifice 16 configuré pour autoriser le déplacement de la tige de poussée 9 au travers de ce premier orifice 16 et donc au travers du corps 7.

Le piston de freinage 8 délimite avec le corps 7 une unique chambre de pression 17 configurée pour être alimentée par le réseau d'alimentation 3.

L'alimentation de la chambre de pression 17 en agent(s) de pression hydraulique(s) sous une pression prédéterminée permet de mettre le piston de freinage 8 dans une position de repos, distincte de la position de freinage, dans laquelle la timonerie de freinage 5 n'applique aucun effort sur l'organe de freinage à garnitures 6, grâce à quoi le frein 2 n'est pas appliqué.

Le corps 7 est également pourvu d'un unique conduit d'alimentation 18 qui débouche du corps 7 à une première extrémité par un unique orifice d'entrée 19, et qui débouche dans la chambre de pression 17 à une deuxième extrémité, opposée à la première extrémité, par un unique orifice de sortie 20.

Le piston de freinage 8 est pourvu d'un premier tronçon 21 cylindrique ayant une première section, d'un deuxième tronçon 22 cylindrique ayant une deuxième section supérieure à la première section, et d'une portion de jonction 23 raccordant le premier tronçon 21 au deuxième tronçon 22.

Le premier tronçon 21 s'étend sensiblement longitudinalement dans le corps 7 depuis la première extrémité 15 du piston de freinage 8 jusqu'à la portion de jonction 23 située à une deuxième extrémité 26 du piston de freinage 8, opposée à sa première extrémité 15.

La première extrémité 15 du piston de freinage 8 est située à proximité du premier orifice 16 ménagé dans le corps 7.

Le deuxième tronçon 22 s'étend sensiblement en regard du premier tronçon 21 de sorte à former une gorge annulaire 24 entre le premier tronçon 21 et le deuxième tronçon 22.

Le deuxième tronçon 22 est ici plus court que le premier tronçon 21.

La gorge annulaire 24 a un fond 25 formé par la portion de jonction 23 et définit un espace ménagé entre les premier et deuxième tronçons 21 et 22.

On observera que la chambre de pression 17 est délimitée d'un côté par le corps 7, et de l'autre côté par une majeure partie du pourtour du deuxième tronçon 22, par le tronçon de la portion de jonction 23 formant le fond 25 de la gorge annulaire 24 et par seulement une partie du premier tronçon 21.

Le piston de freinage 8 est en outre pourvu, à sa deuxième extrémité 26, d'une paroi latérale 27 tournée vers la cavité 10.

Le piston de freinage 8 est configuré pour se déplacer dans le corps 7 tout en maintenant la chambre de pression 17 étanche grâce à une pluralité de joints d'étanchéité disposés entre ce piston de freinage 8 et des bords intérieurs du corps 7.

Plus précisément, le frein 2 comporte un premier joint d'étanchéité 28, ici un joint à lèvre, disposé entre le premier tronçon 21 et le corps 7, dans un premier logement 29 ménagé dans ce corps 7.

Le frein 2 comporte un deuxième joint d'étanchéité 30, ici un joint à lèvre, distinct du premier joint d'étanchéité 28, et disposé également entre le premier tronçon 21 et le corps 7, dans un deuxième logement 31 ménagé dans ce corps 7.

Les premier et deuxième joints d'étanchéité 28 et 30 sont disposés de manière adjacente, et les premier et deuxième logements 29 et 31 sont ici réalisés dans une portion du corps 7 qui se situe dans l'espace ménagé par la gorge annulaire 24, en regard du deuxième tronçon 22.

Le frein 2 comporte un troisième joint d'étanchéité 32, ici un joint à lèvre, disposé entre le deuxième tronçon 22 et le corps 7, dans un troisième logement 33 ménagé dans ce corps 7.

Le frein 2 comporte un quatrième joint d'étanchéité 34, ici un joint à lèvre, distinct du troisième joint d'étanchéité 32, et disposé entre le deuxième tronçon 22 et le corps 7, dans un quatrième logement 35 ménagé dans ce corps 7.

Les troisième et quatrième joints d'étanchéité 32 et 34 sont disposés de manière adjacente.

Le frein 2 est configuré de sorte que les troisième et quatrième joints d'étanchéité 32 et 34 se trouvent au moins partiellement en superposition par rapport aux premier et deuxième joints d'étanchéité 28 et 30 qui sont logés au niveau de la gorge annulaire 24.

En particulier, ici, les premier et troisième joints d'étanchéité 28 et 32 sont superposés l'un par rapport à l'autre et les deuxième et quatrième joints d'étanchéité 30 et 34 sont décalés longitudinalement l'un par rapport à l'autre.

Le quatrième joint d'étanchéité 34, qui est adjacent au troisième joint d'étanchéité 32, est situé d'un premier côté dirigé vers la portion de jonction 23, tandis que le deuxième joint d'étanchéité 30, qui est adjacent au premier joint d'étanchéité 28, est située d'un deuxième côté opposé au premier côté et donc à l'opposé de la portion de jonction 23.

On observera ici que la ou les lèvres des premier et deuxième joints d'étanchéité 28 et 30 sont tournées vers la portion de jonction 23 tandis que la ou les lèvres des troisième et quatrième joints d'étanchéité 32 et 34 sont tournées à l'opposé de la portion de jonction 23.

Les premier et troisième joints d'étanchéité 28 et 32 sont configurés pour former une étanchéité primaire de la chambre de pression 17 ; tandis que les deuxième et quatrième joints d'étanchéité 30 et 34 sont configurés pour former une étanchéité secondaire de la chambre de pression 17.

Le frein 2 comporte un premier segment de guidage 36 du piston de freinage 8 vis-à-vis du corps 7.

Ce premier segment de guidage 36 est disposé entre le premier tronçon 21 et le corps 7, et logé ici dans une cavité 37 ménagée dans le corps 7.

Le frein 2 comporte un deuxième segment de guidage 38 du piston de freinage 8 vis-à-vis du corps 7.

Ce deuxième segment de guidage 38 est disposé entre le deuxième tronçon 22 et le corps 7, et logé dans une cavité 39 ménagée aussi dans le corps 7.

Comme indiqué ci-dessus, le frein 2 est disposé dans le corps 7 et est configuré pour agir sur l'organe de freinage 6 par l'intermédiaire de la timonerie de freinage 5.

Cet organe de freinage 6 comporte ici un disque de frein 40 (ici vu de dessus) monté par exemple sur un essieu 41 de véhicule ferroviaire, ou directement sur la roue à freiner.

Cet organe de freinage 6 comporte en outre ici deux patins 42 pourvus chacun d'une garniture 43 configurée pour être appliquée au contact du disque 40 pour réduire sa vitesse de rotation et par conséquent celle de la roue à freiner, ainsi que d'un oeillet de fixation 44 ménagé à l'opposé de la surface de la garniture 43 configurée pour venir s'appliquer sur le disque de frein 40.

La timonerie de freinage 5 comporte ici deux leviers déformables 45 pourvus chacun d'un bras supérieur et d'un bras inférieur qui sont solidaires.

Chaque bras des leviers 45 peut être articulé sur un connecteur central 46 par l'intermédiaire de deux pivots 47.

Le bras inférieur de chaque levier déformable 45 est relié à l'un des patins 42 par l'intermédiaire de son oeillet de fixation 44.

Le bras supérieur de chaque levier déformable 45 est quant à lui relié à une articulation respective 48, 49.

La timonerie de freinage 5 reçoit le corps 7 entre les bras supérieurs des leviers déformables 45, au niveau des articulations 48 et 49. En d'autres termes, le corps 7 est monté sur la timonerie de freinage 5 par l'intermédiaire des articulations 48 et 49.

Plus précisément, le corps 7 est ici monté à rotation sur l'articulation 49 qui est solidaire d'une extrémité de la tige de poussée 9 tandis qu'il est monté fixe sur l'articulation 48, laquelle est directement solidaire du corps 7.

La timonerie de freinage 5 comporte également une patte de fixation 50 solidaire du connecteur central 46 pour le montage de cette timonerie de freinage 5 sur le véhicule ferroviaire ; afin que les patins de freinage 42 soient situés de part et d'autre du disque de frein 40 (ou de la roue du véhicule ferroviaire).

On notera que le rapprochement des articulations 48 et 49 permet d'écarter les patins 42 l'un de l'autre et qu'à l'inverse, l'éloignement de ces articulations 48 et 49 permet de serrer les patins 42 sur le disque de frein 40 (ou sur la roue du véhicule ferroviaire).

Comme indiqué plus haut, l'unique chambre de pression 17 est raccordée au réseau d'alimentation en agent(s) de pression hydraulique(s) 3 par l'unique conduite de distribution 4 connectée au corps 7 par son orifice d'entrée 19.

Ce réseau 3 comporte ici une première source d'agent de pression hydraulique 55 connectée à un premier point d'entrée 56 du réseau 3 et une seconde source d'agent de pression hydraulique 57 connectée à un deuxième point d'entrée 58 du réseau 3.

Ces première et deuxième sources d'agent de pression hydraulique 55 et 56 sont configurées chacune pour alimenter la chambre de pression 17 par l'intermédiaire du conduit d'alimentation 18.

La première source d'agent de pression hydraulique 55 est ici une source principale d'alimentation, tandis que la seconde source d'agent de pression hydraulique 57 est une source dite de secours qui peut être utilisée en cas de défaillance de la première source d'agent de pression hydraulique 55.

Comme décrit ci-après plus en détail, les première et deuxième sources d'agent de pression hydraulique 55 et 57 sont ici configurées chacune pour alimenter la chambre de pression 17 quelle que soit l'état de l'étanchéité primaire, à savoir opérationnelle ou défectueuse.

Le réseau 3 comporte un unique circuit de distribution 62 raccordé à l'unique conduite de distribution 4 par un point de sortie 63 du réseau 3.

Le réseau 3 comporte une branche primaire 64 qui est configurée pour faire cheminer l'agent de pression hydraulique provenant de la première source d'agent de pression 55, et qui est pourvue d'un dispositif de régulation de pression 65.

Cette branche primaire 64 présente un premier tronçon 66 connectée par une première extrémité au premier point d'entrée 56, et par une deuxième extrémité, opposée à la première extrémité, au dispositif de régulation de pression 65.

Le réseau 3 comporte un premier dispositif de distribution hydraulique 67 disposé dans le circuit de distribution 62, et raccordé à la branche primaire 64 par un second tronçon 68 connecté par une première extrémité au dispositif de régulation de pression 65, et par une deuxième extrémité, opposée à la première extrémité, au premier dispositif de distribution hydraulique 67.

Le dispositif de régulation de pression 65 est ici configuré à la fois pour réguler la pression du fluide hydraulique fourni par la première source d'agent de pression hydraulique 55 et cheminant depuis la branche primaire 64 vers la conduite de distribution 4 de sorte à autoriser le roulage du véhicule ferroviaire, et pour drainer la chambre de pression 17 du fluide hydraulique provenant de cette chambre de pression 17 et cheminant depuis la conduite de distribution 4 et vers un réservoir de vidange 72.

Pour cela, le dispositif de régulation de pression 65 est commandé électriquement via un actionneur 77 et est pourvu d'un tronçon de drainage 78 relié, par une première extrémité, à une sortie du dispositif de régulation de pression 65, et par une deuxième extrémité, opposée à la première extrémité, à un tronçon de vidange 73 grâce à un point de dérivation 79, lequel tronçon de vidange 73 débouche dans le réservoir de vidange 72.

On notera que les première et deuxième sources d'agent de pression hydraulique 55 et 57 délivrent ici chacune un agent de pression hydraulique présentant une valeur de pression égale ici à environ 145 bars. Cependant, seul l'agent de pression issu de la première source 55 est régulé par le dispositif de régulation de pression 65 à une valeur de pression régulée comprise ici entre 0 bar et environ 110 bars.

Le réseau 3 comporte en outre une branche secondaire 69 configurée pour faire cheminer l'agent de pression hydraulique provenant de la deuxième source d'agent de pression 57 en étant directement connectée, par une première extrémité, au deuxième point d'entrée 58.

Le réseau 3 comporte un deuxième dispositif de distribution hydraulique 70 disposé dans le circuit de distribution 62 et raccordé à la branche secondaire 69 par une deuxième extrémité, opposée à sa première extrémité.

Le premier dispositif de distribution hydraulique 67 est disposé entre le deuxième dispositif de distribution hydraulique 70 et le dispositif de régulation de pression 65.

La branche principale 64 est alimentée en agent de pression hydraulique par un accumulateur hydraulique ou par une pompe hydraulique (non représentés) formant la première source 55 ; et la branche secondaire 69 est alimentée en agent de pression hydraulique par un accumulateur hydraulique ou par une pompe hydraulique (non représentés) formant la deuxième source 57.

Le réseau 3 comporte en outre un dispositif de vidange 71 disposé dans le circuit de distribution 62 et pourvu d'un régleur de seuil de pression comportant notamment un élément de rappel 80.

Le dispositif de vidange est configuré pour permettre la vidange de la chambre de pression 17 en cas de freinage d'urgence du véhicule ferroviaire, jusqu'au réservoir de vidange 72, par l'intermédiaire du tronçon de vidange 73 qui est connecté au dispositif de vidange 71.

Le dispositif de vidange 71 n'est ici pas commandé électriquement mais son régleur de seuil de pression peut être taré à une valeur de pression prédéterminée, par exemple comprise entre environ 15 bars et environ 40 bars.

Cela permet d'évacuer le fluide hydraulique de la chambre de pression 17 jusqu'à ce que la valeur de pression prédéterminée (la pression de tarage) soit atteinte dans cette chambre. Par conséquent, l'application du frein 2, grâce au déplacement du piston de freinage 8 depuis sa position de repos vers sa position de freinage sous l'action de l'organe ressort 11, est contrôlée pour ne pas bloquer les roues du véhicule ferroviaire. En d'autres termes, cela permet de maintenir un certain niveau de pression dans le cylindre de frein de sorte à limiter l'effort de freinage appliqué.

Le dispositif de vidange 71 est en outre connecté au point de sortie 63 du réseau 3, via un premier tronçon 74 du circuit de distribution 62, dont la première extrémité est connectée au deuxième dispositif de distribution hydraulique 70, et dont la deuxième extrémité, opposée à la première extrémité, est connectée au point de sortie 63 ; via aussi un deuxième tronçon 75 du circuit de distribution 62, dont la première extrémité est connectée au premier dispositif de distribution hydraulique 67, et dont la deuxième extrémité, opposée à la première extrémité, est connectée au deuxième dispositif de distribution hydraulique 70 ; et via aussi un troisième tronçon 76 du circuit de distribution 62, dont la première extrémité est connectée dispositif de vidange 71, et dont la deuxième extrémité, opposée à la première extrémité, est connectée au premier dispositif de distribution hydraulique 67.

Les premier et deuxième dispositifs de distribution hydraulique 67 et 70 sont formés chacun par un distributeur pourvu de trois orifices et d'un tiroir à deux positions qui est commandé électriquement par un actionneur, et qui est monostable.

On va maintenant décrire plus en détail les premier et deuxième dispositifs de distribution hydrauliques 67 et 70.

Le distributeur 67 comporte un tiroir 81 mobile et un actionneur 82 qui est configuré pour déplacer ce tiroir 81.

L'actionneur 82 est configuré pour recevoir un signal de commande ici électrique.

Le distributeur 67 comporte un ressort de rappel 85 configuré pour déplacer le tiroir 81 d'une deuxième position vers une première position.

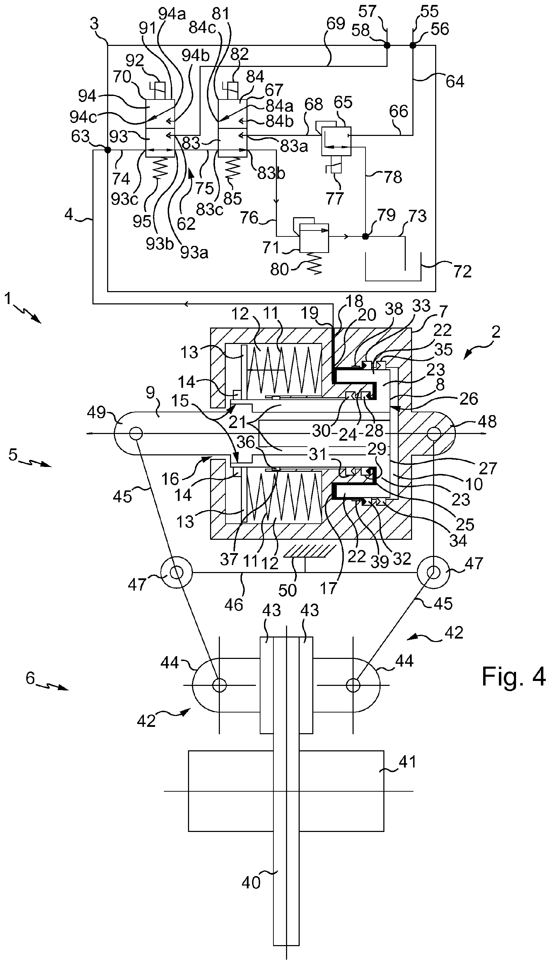

Sur la figure 1, le distributeur 67 est représenté dans sa deuxième position, laquelle deuxième position n'est pas sa position par défaut. Le distributeur 67 est visible dans sa première position (position par défaut) sur les figures 4 à 6.

Autrement dit, l'actionneur 82 du distributeur 67 est configuré pour recevoir un signal électrique non nul pour déplacer le tiroir 81 depuis sa première position vers sa deuxième position.

Le tiroir 81 comporte une première chambre 83 pourvue de trois orifices 83a, 83b et 83c et une deuxième chambre 84 pourvue également de trois orifices 84a, 84b et 84c.

Dans chacune des première et deuxième positions du tiroir 81, le second tronçon 68 de la branche primaire 64 est relié par sa deuxième extrémité à l'un des orifices 83a ou 84a, le troisième tronçon 76 du circuit de distribution 62 est relié par sa deuxième extrémité à l'un des orifices 83b ou 84b, et le deuxième tronçon 75 du circuit de distribution 62 est relié par sa première extrémité à l'un des orifices 83c ou 84c.

Le distributeur 70 comporte un tiroir 91 mobile et un actionneur 92 qui est configuré pour déplacer ce tiroir 91.

L'actionneur 92 est configuré pour recevoir un signal de commande ici électrique.

Le distributeur 70 comporte un ressort de rappel 95 configuré pour déplacer le tiroir 91 d'une deuxième position vers une première position.

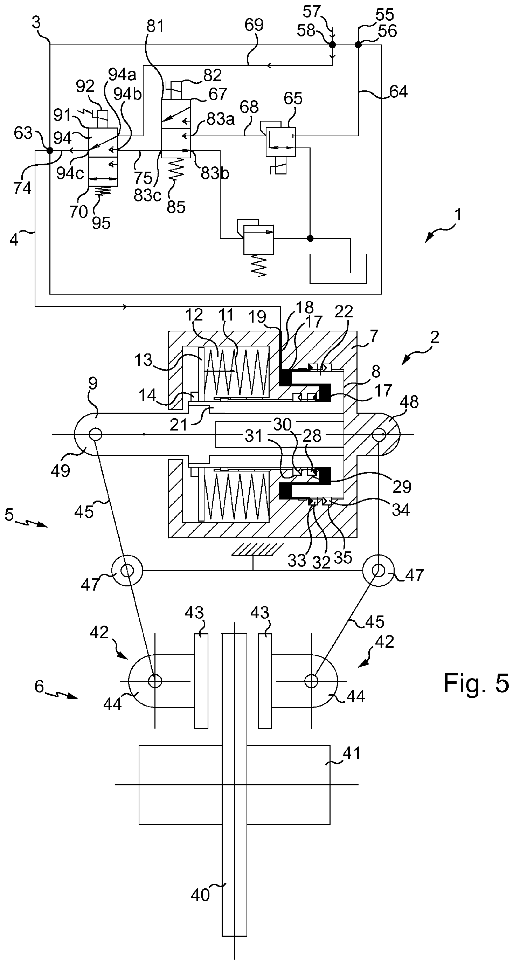

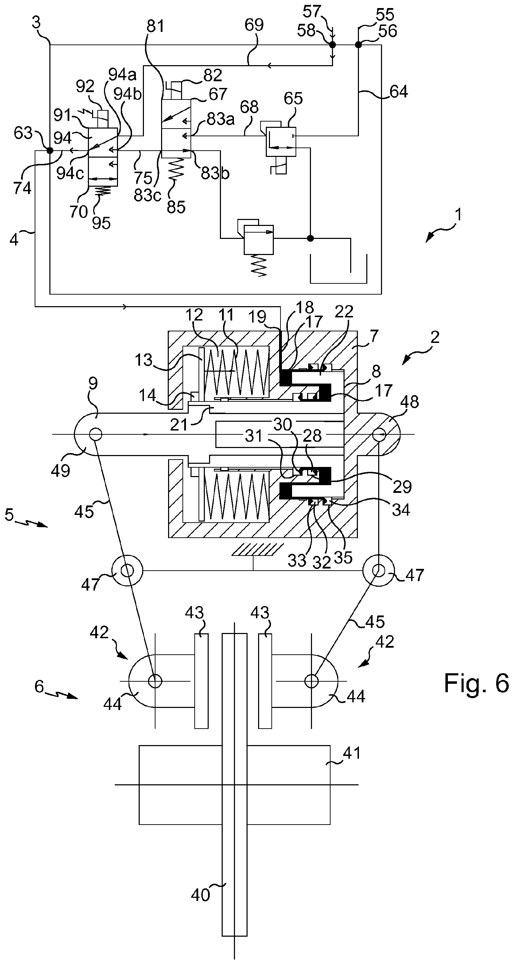

Sur la figure 1, le distributeur 70 est représenté dans sa première position, laquelle première position est sa position par défaut. Le distributeur 70 est visible dans sa deuxième position sur les figures 5 et 6.

Autrement dit, l'actionneur 92 du distributeur 70 est configuré pour recevoir un signal électrique non nul pour déplacer le tiroir 91 depuis sa première position vers sa deuxième position.

Le tiroir 91 comporte une première chambre 93 pourvue de trois orifices 93a, 93b et 93c et une deuxième chambre 94 pourvue également de trois orifices 94a, 94b et 94c.

Dans chacune des première et deuxième positions du tiroir 91, la branche secondaire 69 est reliée par sa deuxième extrémité à l'un des orifices 93a ou 94a, le deuxième tronçon 75 du circuit de distribution 62 est relié par sa deuxième extrémité à l'un des orifices 93b ou 94b, et le premier tronçon 74 du circuit de distribution 62 est relié par sa première extrémité à l'un des orifices 93c ou 94c.

On va maintenant décrire le fonctionnement du système de freinage ferroviaire 1 en référence aux figures 1 à 6, qui illustrent schématiquement différentes configurations de ce système 1.

Sur la figure 1, le système de freinage ferroviaire 1 est dans une configuration de freinage de service où le frein 2 est appliqué.

Dans cette configuration de freinage de service, la chambre de pression 17 n'est pas alimentée par les sources d'agent de pression hydrauliques 55 et 57.

L'organe ressort 11 est en tension, c'est à dire dans sa position stable où il est décomprimé. L'organe ressort 11 agit sur le flasque d'appui 13 qui lui-même maintient le piston de freinage 8 dans sa position de freinage.

La tige de poussée 9 et l'articulation 49 sont sollicitées par le piston de freinage 8, éloignant ainsi l'une de l'autre les articulations 48 et 49 et provoquant le rapprochement des patins 42 et donc l'application des garnitures 43 contre le disque de frein 40.

Dans cette configuration de freinage de service, ou d'application normale du frein 2 du système 1, les leviers 45 peuvent être au moins partiellement déformés élastiquement.

La chambre de pression 17 est ici au moins partiellement drainée, ou vidangée, par le déplacement du piston de freinage 8 depuis sa position de repos vers sa position de freinage.

Le fluide hydraulique se trouvant dans la chambre de pression 17, qui provient initialement de l'une des première et deuxième sources d'agent de pression 55 et 57, se trouve au moins en partie expulsé de cette chambre de pression 17 par le piston de freinage 8.

Le fluide hydraulique chemine depuis la chambre de pression 17 vers la conduite de distribution 4 au travers du conduit d'alimentation 18 et de ses orifices de sortie et d'entrée 20 et 19, jusqu'au point de sortie 63 du réseau 3.

Dans cette configuration de freinage de service, l'actionneur 92 du distributeur 70 a reçu un signal de commande électrique nul ou suffisamment faible pour que son ressort de rappel 95 rappelle son tiroir 91 dans sa première position et donc dans sa position par défaut.

Dans cette première position du tiroir 91, la première chambre 93 de ce tiroir 91 a son orifice 93c connecté à la première extrémité du premier tronçon 74 du circuit de distribution 62, son orifice 93b connecté à la deuxième extrémité du deuxième tronçon 75 du circuit de distribution 62 ; et son orifice 93a qui est bouché et connecté à la deuxième extrémité de la branche secondaire 69.

Dans cette configuration de freinage de service, l'actionneur 82 du distributeur 67 a reçu un signal de commande électrique non nul et suffisamment fort pour déplacer le tiroir 81 à l'encontre de son ressort de rappel 85 pour le mettre dans sa deuxième position.

Dans cette deuxième position du tiroir 81, la première chambre 84 de ce tiroir 81 a son orifice 84a connecté à la deuxième extrémité du deuxième tronçon 68 de la branche primaire 64, son orifice 84c connecté à la première extrémité du deuxième tronçon 75 du circuit de distribution 62 ; et son orifice 84b qui est bouché et connecté à la deuxième extrémité du troisième tronçon 76 du circuit de distribution 62.

Dans cette configuration de freinage de service, l'actionneur 77 est alimenté électriquement pour commander le dispositif de régulation 65 de sorte que ce dernier est configuré pour permettre le drainage de la chambre de pression 17 et ainsi évacuer le fluide hydraulique vers le réservoir de vidange 72.

Plus précisément, le fluide hydraulique poursuit son cheminement depuis le point de sortie 63 du réseau 3 jusqu'au réservoir de vidange 72, en passant successivement par les premier et deuxième tronçons 74 et 75 du circuit de distribution 62, par le second tronçon 68 de la branche primaire 64, par le dispositif de régulation 65, par le tronçon de drainage 78, puis par le tronçon de vidange 73 via le point de dérivation 79.

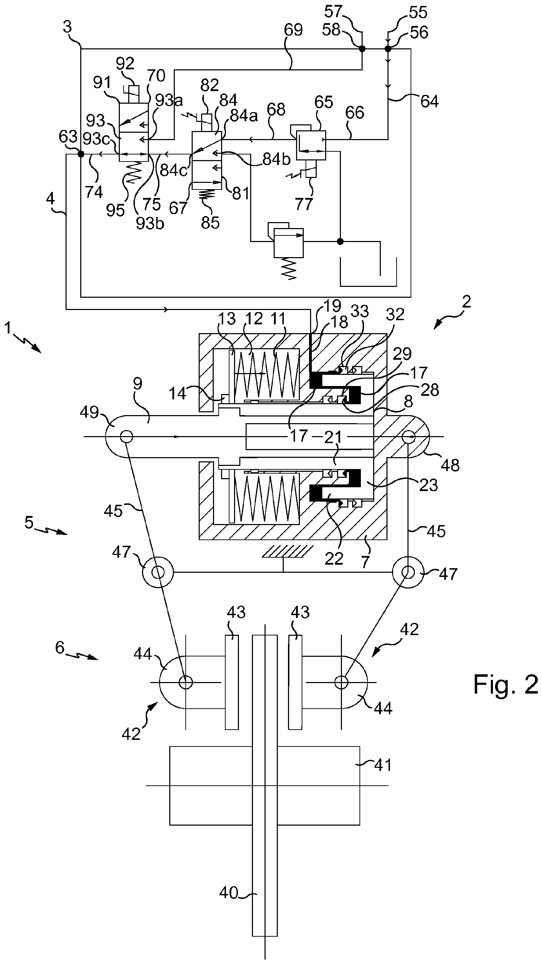

Sur la figure 2, le système de freinage ferroviaire 1 est dans une configuration de roulage normal où le frein 2 n'est pas appliqué et où l'étanchéité primaire est ici opérationnelle.

Dans cette configuration de roulage normal, la chambre de pression 17 est alimentée par un fluide hydraulique provenant de la première source d'agent de pression 55 et cheminant le long de la branche primaire 64, sur une portion du circuit de distribution 62, et le long de la conduite de distribution 4 jusqu'au corps 7.

La chambre de pression 17 est ici étanche notamment grâce aux premier et troisième joints d'étanchéité 28 et 32.

Le fluide hydraulique entre dans le conduit d'alimentation 18 par son orifice d'entrée 19 et en sort par son orifice de sortie 20 pour entrer dans la chambre de pression 17, et ainsi agir sur le piston de freinage 8 pour le déplacer depuis sa position de freinage vers sa position de repos.

Dans cette configuration de roulage normal, le piston de freinage 8 entraîne le flasque d'appui 13 à l'encontre de la force de l'organe ressort 11, qui se comprime.

La tige de poussée 9 et l'articulation 49 ne sont plus sollicitées par le piston de freinage 8, rapprochant ainsi l'une de l'autre les articulations 48 et 49 et provoquant l'éloignement des patins 42 et donc le maintien à distance des garnitures 43 vis-à-vis du disque de frein 40, pour ne pas serrer ce dernier.

Dans cette configuration de roulage normal, l'actionneur 77 est alimenté électriquement pour commander le dispositif de régulation 65 de sorte que ce dernier soit configuré pour réguler, à une valeur prédéterminée, la valeur de pression du fluide hydraulique de la première source d'agent de pression 55.

Dans cette configuration de roulage normal, le distributeur 67 est dans la même position que sur la figure 1, c'est-à-dire dans sa deuxième position, et le distributeur 70 est aussi dans la même position que sur la figure 1, c'est-à-dire dans sa première position.

Le fluide hydraulique à pression régulée provenant de la première source d'agent de pression 55 chemine donc depuis le premier point d'entrée 56 du réseau 3 jusqu'au conduit d'alimentation 18 du corps 7, en passant par le premier tronçon 66 de la branche primaire 64, le dispositif de régulation 65, le deuxième tronçon 68 de la branche primaire 64, les premier et deuxième tronçons 74 et 75 du circuit de distribution 62, le point de sortie 63 et la conduite de distribution 4.

On notera que le frein 2 et le dispositif de régulation 65 sont configurés pour que le fluide hydraulique présente une valeur régulée de pression qui permette de solliciter le piston de freinage 8 à l'encontre de l'organe ressort 11 jusqu'à ce que ce piston atteigne sa position de repos.

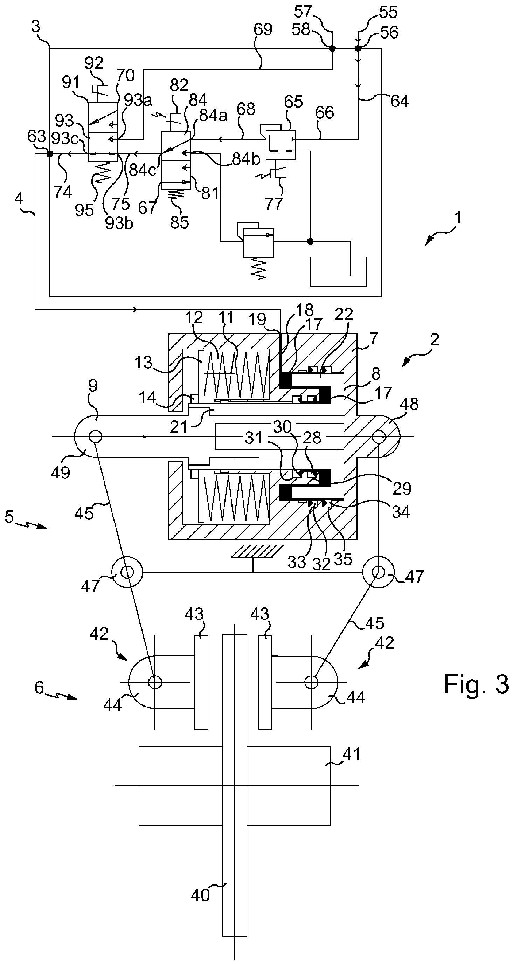

Sur la figure 3, le système de freinage ferroviaire 1 est dans une configuration de roulage avec défaut d'étanchéité, où le frein 2 n'est pas appliqué et où l'étanchéité primaire est défectueuse.

Cela signifie que le premier joint d'étanchéité 28 et/ou le troisième joint d'étanchéité 32 est/sont défectueux ; tandis que l'étanchéité secondaire, dite de secours, est opérationnelle.

Cette configuration de roulage avec défaut d'étanchéité peut être ou peut ne pas être détecté par le véhicule ferroviaire. Cela signifie que l'étanchéité secondaire se substitue automatiquement à l'étanchéité primaire en cas de défaillance de cette dernière, du fait de la configuration notamment des joints 28, 30, 32 et 34 et du piston de freinage 8.

Dans cette configuration de roulage avec défaut d'étanchéité, la chambre de pression 17 continue d'être alimentée par un fluide hydraulique provenant de la première source d'agent de pression 55.

La chambre de pression 17 est ici étanche grâce aux deuxième et quatrième joints d'étanchéité 30 et 34.

Comme pour la configuration de roulage normal, l'actionneur 77 est alimenté électriquement pour commander le dispositif de régulation 65 de sorte que ce dernier soit configuré pour réguler, à une valeur prédéterminée, la valeur de pression du fluide hydraulique de la première source d'agent de pression 55 ; et les distributeurs 67 et 70 sont dans la même position que sur la figure 2, à savoir respectivement dans sa deuxième position et dans sa première position.

Le fluide hydraulique à pression régulée provenant de la première source d'agent de pression 55 chemine donc depuis le premier point d'entrée 56 du réseau 3 jusqu'au conduit d'alimentation 18 du corps 7, en passant par le premier tronçon 66 de la branche primaire 64, le dispositif de régulation 65, le deuxième tronçon 68 de la branche primaire 64, les premier et deuxième tronçons 74 et 75 du circuit de distribution 62, le point de sortie 63 et la conduite de distribution 4.

Le fluide hydraulique à pression régulée chemine dans la conduite de distribution 4 puis entre dans le conduit d'alimentation 18 par son orifice d'entrée 19 et en sort par son orifice de sortie 20 pour entrer dans la chambre de pression 17, et ainsi agir sur le piston de freinage 8 pour le déplacer depuis sa position de freinage vers sa position de repos.

Le piston de freinage 8 entraîne le flasque d'appui 13 à l'encontre de la force de l'organe ressort 11, qui se comprime.

La tige de poussée 9 et l'articulation 49 ne sont plus sollicitées par le piston de freinage 8, rapprochant ainsi l'une de l'autre les articulations 48 et 49 et provoquant l'éloignement des patins 42 et donc le maintien à distance des garnitures 43 vis-à-vis du disque de frein 40, pour ne pas serrer ce dernier.

On notera que le frein 2 et le dispositif de régulation 65 sont configurés pour que le fluide hydraulique présente une valeur régulée de pression qui permette de solliciter le piston de freinage 8 à l'encontre de l'organe ressort 11 jusqu'à ce que ce piston atteigne sa position de repos, malgré le défaut d'étanchéité primaire, et plus généralement, que ce soit l'étanchéité primaire ou secondaire qui assure la délimitation de la chambre de pression 17.

Sur la figure 4, le système de freinage ferroviaire 1 est dans une configuration de freinage d'urgence où le frein 2 est appliqué, dite aussi configuration de freinage de secours ou de sécurité.

Dans cette configuration de freinage d'urgence, la chambre de pression 17 n'est pas alimentée par les sources d'agent de pression hydrauliques 55 et 57.

Comme dans la configuration de freinage de service (figure 1), l'organe ressort 11 est en tension, c'est à dire dans sa position stable où il est décomprimé. L'organe ressort 11 agit sur le flasque d'appui 13 qui lui-même maintient le piston de freinage 8 dans sa position de freinage. La tige de poussée 9 et l'articulation 49 sont sollicitées par le piston de freinage 8, éloignant ainsi l'une de l'autre les articulations 48 et 49 et provoquant le rapprochement des patins 42 et donc l'application des garnitures 43 contre le disque de frein 40. Les leviers 45 peuvent être au moins partiellement déformés élastiquement.

La chambre de pression 17 est ici au moins partiellement vidangée par le déplacement du piston de freinage 8 depuis sa position de repos vers sa position de freinage.

Le fluide hydraulique se trouvant dans la chambre de pression 17, qui provient initialement de l'une des première et deuxième sources d'agent de pression 55 et 57, se trouve au moins en partie expulsé de cette chambre de pression 17 par le piston de freinage 8.

Le fluide hydraulique chemine depuis la chambre de pression 17 vers la conduite de distribution 4 au travers du conduit d'alimentation 18 et de ses orifices de sortie et d'entrée 20 et 19, jusqu'au point de sortie 63 du réseau 3.

Dans cette configuration de freinage d'urgence, le distributeur 70 est dans la même position que sur les figures 1 à 3, c'est-à-dire dans sa première position (par défaut) ; tandis que l'actionneur 82 du distributeur 67 a désormais reçu un signal de commande électrique nul ou suffisamment faible pour que son ressort de rappel 85 rappelle son tiroir 81 dans sa première position et donc dans sa position par défaut.

Dans cette première position du tiroir 81, la première chambre 83 de ce tiroir 81 a son orifice 83c connecté à la première extrémité du deuxième tronçon 75 du circuit de distribution 62, son orifice 83b connecté à la deuxième extrémité du troisième tronçon 76 du circuit de distribution 62 ; et son orifice 83a qui est bouché et connecté à la deuxième extrémité du deuxième tronçon 68 de la branche primaire 64.

Dans cette configuration de freinage d'urgence, l'actionneur 77 n'est plus alimenté électriquement de sorte que le dispositif de régulation 65 n'est plus commandé.

La vidange de la chambre de pression 17 jusqu'au réservoir de vidange 72 s'effectue par conséquent via le circuit de distribution 62 et grâce au dispositif de vidange 71.

Plus précisément, le fluide hydraulique chemine depuis le point de sortie 63 jusqu'au dispositif de vidange 71 en passant par les premier, deuxième et troisième tronçons 74, 75 et 77 du circuit de distribution 62, puis est dirigé depuis ce dispositif de vidange 71 vers le réservoir de vidange 72 en passant par le tronçon de vidange 73.

Le dispositif de vidange 71 n'est ici pas commandé électriquement mais son régleur de seuil de pression est taré à une valeur de pression prédéterminée de sorte maintenir un certain niveau de pression dans la chambre de pression 17.

Cela permet de contrôler le déplacement du piston de freinage 8 depuis sa position de repos vers sa position de freinage sous l'action de l'organe ressort 11 et par conséquent l'application du frein 2, dans le but de ne pas bloquer les roues du véhicule ferroviaire.

Sur la figure 5, le système de freinage ferroviaire 1 est dans une configuration de roulage avec défaut de la première source d'agent de pression hydraulique où le frein 2 n'est pas appliqué, l'étanchéité primaire est ici opérationnelle, mais la première source d'alimentation d'agent de pression hydraulique 55 est défectueuse.

Le cas échéant, cette première source d'agent de pression hydraulique 55 n'est pas capable d'alimenter la chambre de pression 17 en un fluide hydraulique et c'est donc la seconde source d'agent de pression hydraulique 57 qui prend le relais et qui alimente la chambre de pression 17 en un fluide hydraulique.

Dans cette configuration de roulage avec défaut de la première source d'agent de pression hydraulique, la chambre de pression 17 est alimentée par un fluide hydraulique provenant de la deuxième source d'agent de pression 57, dite source de secours, et cheminant le long de la branche secondaire 69, dite branche de secours, le long d'une portion du circuit de distribution 62, et le long de la conduite de distribution 4 jusqu'au corps 7.

Comme dans la configuration de roulage normal illustrée sur la figure 2, la chambre de pression 17 est ici étanche notamment grâce aux premier et troisième joints d'étanchéité 28 et 32.

Le fluide hydraulique entre dans le conduit d'alimentation 18 par son orifice d'entrée 19 et en sort par son orifice de sortie 20 pour entrer dans la chambre de pression 17, et ainsi agir sur le piston de freinage 8 pour le déplacer depuis sa position de freinage vers sa position de repos.

Dans la configuration de roulage avec défaut de la première source d'agent de pression hydraulique, le piston de freinage 8 entraîne le flasque d'appui 13 à l'encontre de la force de l'organe ressort 11, qui se comprime.

La tige de poussée 9 et l'articulation 49 ne sont plus sollicitées par le piston de freinage 8, rapprochant ainsi l'une de l'autre les articulations 48 et 49 et provoquant l'éloignement des patins 42 et donc le maintien à distance des garnitures 43 vis-à-vis du disque de frein 40, pour ne pas serrer ce dernier.

Dans cette configuration de roulage avec défaut de la première source d'agent de pression hydraulique, l'actionneur 92 du distributeur 70 a reçu un signal de commande électrique non nul et suffisamment fort pour déplacer le tiroir 91 à l'encontre de son ressort de rappel 95 pour le mettre dans deuxième position.

Dans cette deuxième position du tiroir 91, la première chambre 94 de ce tiroir 91 a son orifice 94a connecté à la deuxième extrémité de la branche secondaire 69, son orifice 94c connecté à la première extrémité du premier tronçon 74 du circuit de distribution 62 ; et son orifice 94b qui est bouché et connecté à la deuxième extrémité du deuxième tronçon 75 du circuit de distribution 62.

Dans cette configuration de roulage avec défaut de la première source d'agent de pression hydraulique, le distributeur 67 est dans la même position que sur la figure 4, c'est-à-dire dans sa première position (position par défaut) ; et l'actionneur 77 n'est pas alimenté électriquement de sorte que le dispositif de régulation 65 n'est plus commandé.

Le fluide hydraulique à pression non régulée provenant de la deuxième source d'agent de pression hydraulique 57 chemine depuis le deuxième point d'entrée 58 du réseau 3 jusqu'au conduit d'alimentation 18 du corps 7, en passant par la branche secondaire 69, le premier tronçon 74 du circuit de distribution 62, le point de sortie 63 et la conduite de distribution 4.

On notera que le frein 2 et l'accumulateur hydraulique ou la pompe hydraulique fournissant le fluide hydraulique de la deuxième source d'agent de pression 57 sont configurés pour que le fluide hydraulique présente une valeur de pression qui permette de solliciter le piston de freinage 8 à l'encontre de l'organe ressort 11 jusqu'à ce que ce piston atteigne sa position de repos.

Sur la figure 6, le système de freinage ferroviaire 1 est dans une configuration de roulage avec défaut de la première source d'agent de pression hydraulique et défaut d'étanchéité, où le frein 2 n'est pas appliqué et où l'étanchéité primaire est défectueuse.

Comme dans la configuration de roulage avec défaut de la première source d'agent de pression hydraulique illustrée sur la figure 5, cela signifie que la première source d'agent de pression hydraulique 55 n'est pas capable d'alimenter la chambre de pression 17 en un fluide hydraulique et c'est donc la seconde source d'agent de pression hydraulique 57 qui prend le relais et qui alimente la chambre de pression 17 en un fluide hydraulique.

Au surplus, comme dans la configuration de roulage avec défaut d'étanchéité illustrée sur la figure 3, cela signifie également que le premier joint d'étanchéité 28 et/ou le troisième joint d'étanchéité 32 est/sont défectueux ; tandis que l'étanchéité secondaire, dite de secours, est opérationnelle.

Dans cette configuration de roulage avec défaut de la première source d'agent de pression hydraulique et défaut d'étanchéité, la défaillance de l'étanchéité primaire peut être ou peut ne pas être détecté par le véhicule ferroviaire. Cela signifie que l'étanchéité secondaire se substitue automatiquement à l'étanchéité primaire en cas de défaillance de cette dernière, du fait de la configuration notamment des joints 28, 30, 32 et 34 et du piston de freinage 8.

Dans cette configuration de roulage avec défaut de la première source d'agent de pression hydraulique et défaut d'étanchéité, la chambre de pression 17 est alimentée par un fluide hydraulique provenant de la deuxième source d'agent de pression 57, dite source de secours, et cheminant le long de la branche secondaire 69, dite branche de secours, le long d'une portion du circuit de distribution 62, et le long de la conduite de distribution 4 jusqu'au corps 7.

La chambre de pression 17 est ici étanche grâce aux deuxième et quatrième joints d'étanchéité 30 et 34.

Le fluide hydraulique entre dans le conduit d'alimentation 18 par son orifice d'entrée 19 et en sort par son orifice de sortie 20 pour entrer dans la chambre de pression 17, et ainsi agir sur le piston de freinage 8 pour le déplacer depuis sa position de freinage vers sa position de repos.

Dans la configuration de roulage avec défaut de la première source d'agent de pression hydraulique et défaut d'étanchéité, le piston de freinage 8 entraîne le flasque d'appui 13 à l'encontre de la force de l'organe ressort 11, qui se comprime.

La tige de poussée 9 et l'articulation 49 ne sont plus sollicitées par le piston de freinage 8, rapprochant ainsi l'une de l'autre les articulations 48 et 49 et provoquant l'éloignement des patins 42 et donc le maintien à distance des garnitures 43 vis-à-vis du disque de frein 40, pour ne pas serrer ce dernier.

Dans cette configuration de roulage avec défaut de la première source d'agent de pression hydraulique et défaut d'étanchéité, les distributeurs 67 et 70 sont dans les mêmes positions que sur la figure 5, c'est-à-dire respectivement dans la première position (position par défaut) et dans la deuxième position ; et l'actionneur 77 n'est pas alimenté électriquement de sorte que le dispositif de régulation 65 n'est pas commandé.

Le fluide hydraulique à pression non régulée provenant de la deuxième source d'agent de pression hydraulique 57 chemine depuis le deuxième point d'entrée 58 du réseau 3 jusqu'au conduit d'alimentation 18 du corps 7, en passant par la branche secondaire 69, le premier tronçon 74 du circuit de distribution 62, le point de sortie 63 et la conduite de distribution 4.

On notera que le frein 2 et l'accumulateur hydraulique ou la pompe hydraulique fournissant le fluide hydraulique de la deuxième source d'agent de pression 57 sont configurés pour que le fluide hydraulique présente une valeur de pression qui permette de solliciter le piston de freinage 8 à l'encontre de l'organe ressort 11 jusqu'à ce que ce piston atteigne sa position de repos, malgré le défaut d'étanchéité primaire, et plus généralement, que ce soit l'étanchéité primaire ou secondaire qui assure la délimitation de la chambre de pression 17.

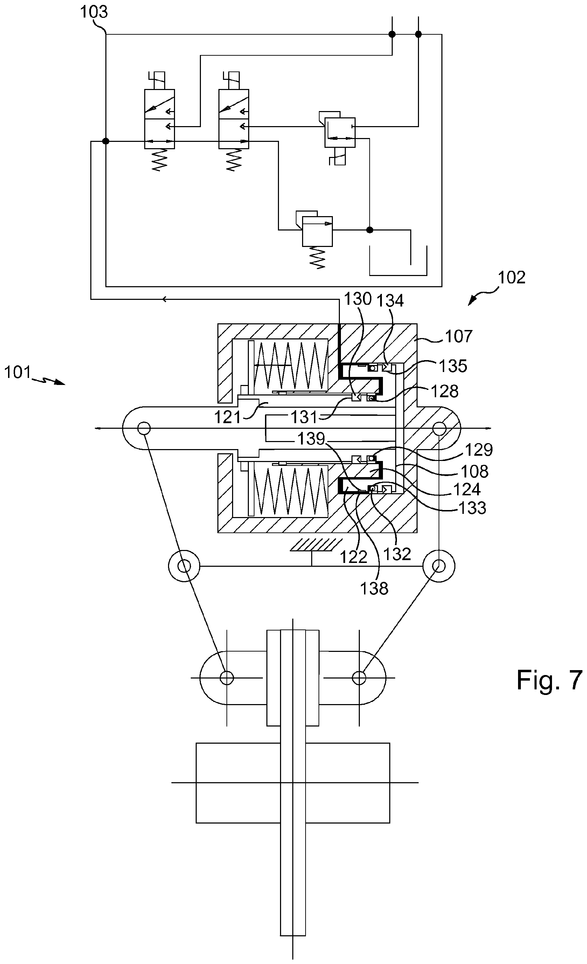

La figure 7 représente une variante de réalisation du système de freinage ferroviaire tel que décrit ci-dessus.

D'une manière générale, on a employé pour les éléments similaires, les mêmes numéros de références mais additionnés du nombre 100.

Le système 101 illustré sur la figure 7 diffère du système 1 illustré sur les figures 1 à 6 en ce que le dispositif de freinage 102 comporte un premier joint d'étanchéité 128 qui est un joint composite plutôt qu'un joint à lèvre, ainsi qu'un troisième joint d'étanchéité 132 qui est aussi un joint composite plutôt qu'un joint à lèvre.

Le système 101 diffère également du système 1 en ce que les premier et deuxième joints d'étanchéité 128 et 130 sont disposés entre le corps 107 et le premier tronçon 121 du piston de freinage 108, au niveau de la gorge annulaire 124 et en regard du deuxième tronçon 122 du piston de freinage 108, respectivement dans des premier et deuxième logements 129 et 131 qui sont ici ménagés chacun dans le premier tronçon 121 plutôt que dans le corps 107 ; et en ce que les troisième et quatrième joints d'étanchéité 132 et 134 sont disposés entre le corps 107 et ce deuxième tronçon 122, respectivement dans des troisième et quatrième logements 133 et 135 qui sont ici ménagés chacun dans le deuxième tronçon 122 plutôt que dans le corps 107.

Le système 101 illustré diffère en outre du système 1 en ce que le deuxième segment de guidage 138 est disposé entre le corps 107 et le deuxième tronçon 122, dans une cavité 139 ici ménagée dans ce deuxième tronçon 122 plutôt que dans le corps 107.

Le réseau d'alimentation 103 est similaire au réseau 3 décrit ci-dessus et le fonctionnement du système de freinage ferroviaire 101 est également identique à celui du système de freinage ferroviaire 1 décrit plus haut.

Dans des variantes non illustrées :
- l'agent de pression est pneumatique plutôt qu'hydraulique ;
- le piston de freinage ne présente pas seulement un premier tronçon et un deuxième tronçon de sections différentes, mais peut aussi présenter un ou plusieurs autres tronçons, dont les sections peuvent être différentes de celles des premier et deuxième tronçons ;
- l'étanchéité primaire est réalisée avec des premier et troisième joints toriques ou à lobes ou encore compacts plutôt que des joints à lèvres ou composites ;
- l'étanchéité secondaire est réalisée avec des deuxième et quatrième joints composites, ou toriques, ou à lobes ou encore compacts plutôt que des joints à lèvres ;
- l'étanchéité primaire est réalisée avec des premier et troisième joints non similaires, c'est-à-dire appartenant à des familles distinctes de joints, familles choisies parmi celles des joints composites, des joints à lèvre, des joints toriques, des joints à lobes et des joints dits compacts ;
- l'étanchéité secondaire est réalisée avec des deuxième et quatrième joints non similaires, c'est-à-dire appartenant à des familles distinctes de joints, familles choisies parmi celles des joints composites, des joints à lèvre, des joints toriques, des joints à lobes et des joints dits compacts ;
- un des premier et deuxième joints d'étanchéité est situé dans un logement ménagé dans le premier tronçon du piston de freinage, et l'autre des premier et deuxième joints d'étanchéité est situé dans un logement ménagé dans le corps du dispositif de freinage ;
- un des troisième et quatrième joints d'étanchéité est situé dans un logement ménagé dans le deuxième tronçon du piston de freinage, et l'autre des troisième et quatrième joints d'étanchéité est situé dans un logement ménagé dans le corps du dispositif de freinage ;
- seul le premier joint est logé au niveau de la gorge annulaire, en regard du deuxième tronçon, tandis que le deuxième joint est logé à distance de la gorge annulaire et n'est pas en regard du deuxième tronçon ;
- les premier et deuxième joints ne sont pas logés au niveau de la gorge annulaire et en regard du deuxième tronçon, mais ils sont plutôt tous deux logés à distance de la portion de jonction ;
- les quatre joints sont agencés de sorte que les deuxième et quatrième joints sont décalés par rapport aux premier et troisième joints, plutôt qu'en superposition par rapport à ceux-ci ;
- les premier et deuxième joints et/ou les troisième et quatrième joints ne sont respectivement pas adjacents mais ménagés à distance l'un de l'autre ;
- les premier et deuxième segments de guidage sont logés dans des cavités ménagées dans le piston de freinage ;
- le premier segment de guidage est logé dans une cavité ménagée dans le piston de freinage tandis que le deuxième segment de guidage est logé dans une cavité ménagée dans le corps du dispositif de freinage ;
- le dispositif de freinage est pourvu de plusieurs premiers segments de guidage sur le premier tronçon du piston de freinage et/ou de plusieurs deuxièmes segments de guidage sur le deuxième tronçon du piston de freinage ;
- l'opération de réarmer le dispositif de freinage est effectuée en commandant les distributeurs de manière mécanique ou hydraulique ou encore pneumatique plutôt qu'électrique ;
- les distributeurs sont bistables plutôt que monostables et sont dépourvus de ressort de rappel ; et/ou
- le système de freinage ferroviaire présente une timonerie de freinage différente de celle illustrée sur les figures, en particulier, la timonerie de freinage comporte une semelle configurée pour agir directement sur une roue du véhicule ferroviaire, cette semelle étant directement articulée par une articulation du type pivot fixée à la tige de poussée, un levier rigide fixé au corps du système ainsi qu'un levier déformable fixé à la fois au levier rigide et à l'articulation sur la semelle.

On rappelle plus généralement que l'invention ne se limite pas aux exemples décrits et représentés.

## Revendications

1. Système de freinage ferroviaire pour véhicule ferroviaire à organes de freinage (6) à au moins une garniture ou à au moins une semelle, comportant une timonerie de freinage (5) configurée pour agir sur au moins un dit organe de freinage (6), et un dispositif de freinage (2) pourvu d'un corps (7) et d'un actionneur mobile par rapport audit corps (7) pour agir sur ladite timonerie de freinage (5) ; ledit actionneur comporte un unique piston de freinage (8) présentant un premier tronçon (21) ayant une première section et un deuxième tronçon (22) ayant une deuxième section supérieure à ladite première section, ledit piston de freinage (8) délimitant avec ledit corps (7) une unique chambre de pression (17) configurée pour être alimentée par au moins une source d'agent de pression (55, 57) pour mettre ledit piston de freinage (8) dans une position de repos dans laquelle ladite timonerie de freinage (5) n'applique aucun effort sur ledit au moins un organe de freinage (6), grâce à quoi ledit dispositif de freinage (2) n'est pas appliqué ; ledit système de freinage ferroviaire (1) comportant en outre un premier joint d'étanchéité (28) logé entre ledit premier tronçon (21) dudit piston de freinage (8) et ledit corps (7); ledit système de freinage ferroviaire (1) étant **caractérisé en ce qu'**il comporte un deuxième joint d'étanchéité (30), distinct dudit premier joint d'étanchéité (28), logé également entre ledit premier tronçon (21) dudit piston de freinage (8) et ledit corps (7), un troisième joint d'étanchéité (32) logé entre ledit deuxième tronçon (22) dudit piston de freinage (8) et ledit corps (7), et un quatrième joint d'étanchéité (34), distinct dudit troisième joint d'étanchéité (32), logé également entre ledit deuxième tronçon (22) dudit piston de freinage (8) et ledit corps (7) ; lesdits premier et troisième joints d'étanchéité (28, 32) étant configurés pour former une étanchéité primaire de ladite chambre de pression (17) et lesdits deuxième et quatrième joints d'étanchéité (30, 34) étant configurés pour former une étanchéité secondaire de ladite chambre de pression (17).

2. Système selon la revendication 1, **caractérisé en ce que** ledit dispositif de freinage (2) est en outre pourvu d'un organe ressort (11) logé dans une cavité (12) ménagée dans ledit corps (7) et d'un flasque d'appui (13) assujetti mécaniquement à la fois audit organe ressort (11) et audit piston de freinage (8) ; ledit organe ressort (11) étant configuré pour mettre, sans sollicitation extérieure et par l'intermédiaire dudit flasque d'appui (13), ledit piston de freinage (8) dans une position de freinage dans laquelle ladite timonerie de freinage (5) applique un effort sur ledit au moins un organe de freinage (6), grâce à quoi ledit dispositif de freinage (2) est appliqué.

3. Système selon l'une des revendications 1 et 2, **caractérisé en ce que** ledit premier tronçon (21) dudit piston de freinage (8) s'étend sensiblement longitudinalement dans ledit corps (7) et est assujetti mécaniquement à ladite timonerie de freinage (5), et ledit piston de freinage (8) comporte en outre une portion de jonction (23) raccordant ledit premier tronçon (21) audit deuxième tronçon (22), lequel deuxième tronçon (22) s'étend sensiblement en regard dudit premier tronçon (21) de sorte à former une gorge annulaire (24) entre ledit premier tronçon (21) et ledit deuxième tronçon (22), ladite gorge annulaire (24) ayant un fond (25) formé par ladite portion de jonction (23).

4. Système selon la revendication 3, **caractérisé en ce qu'**au moins un desdits premier et deuxième joints d'étanchéité (28, 30) est logé au niveau de la gorge annulaire (24) et/ou en regard dudit deuxième tronçon (22).

5. Système selon la revendication 4, **caractérisé en ce que** ledit dispositif de freinage (2) est configuré de sorte qu'au moins un desdits troisième et quatrième joints d'étanchéité (32, 34) se trouve au moins partiellement en superposition par rapport audit au moins un des premier et deuxième joints d'étanchéité (28, 30) qui est logé au niveau de la gorge annulaire (24), au moins lorsque ledit piston de freinage (8) est en position de repos.

6. Système selon la revendication 5, **caractérisé en ce que** lesdits premier et troisième joints d'étanchéité (28, 32) sont agencés de sorte à être au moins partiellement en superposition l'un par rapport à l'autre et lesdits deuxième et quatrième joints d'étanchéité (30, 34) sont agencés pour être décalés longitudinalement l'un par rapport à l'autre.

7. Système selon la revendication 6, **caractérisé en ce que** ledit quatrième joint d'étanchéité (34) est adjacent audit troisième joint d'étanchéité (32) et logé d'un premier côté dirigé vers ladite portion de jonction (23), tandis que ledit deuxième joint d'étanchéité (30) est adjacent audit premier joint d'étanchéité (28) et logé d'un deuxième côté opposé audit premier côté.

8. Système selon l'une quelconque des revendications 1 à 7, **caractérisé en ce que** lesdits premier et troisième joints d'étanchéité (28, 32) sont similaires et appartiennent à une première famille de joints, lesdits deuxième et quatrième joints d'étanchéité (30, 34) sont similaires et appartiennent à une deuxième famille de joints, distincte ou identique à ladite première famille de joints, lesdites première et deuxième familles de joints étant de préférence choisies parmi celles des joints composites, des joints à lèvre, des joints toriques, des joints à lobes et des joints dits compacts.

9. Système selon l'une quelconque des revendications 1 à 8, **caractérisé en ce qu'**au moins un desdits premier, deuxième, troisième et quatrième joints d'étanchéité (28, 30, 32, 34) est situé dans un logement (29, 31, 33, 35) ménagé dans ledit corps (7) dudit dit dispositif de freinage (2).

10. Système selon l'une quelconque des revendications 1 à 9, **caractérisé en ce qu'**au moins un desdits premier et deuxième joints d'étanchéité est situé dans un logement ménagé dans ledit premier tronçon dudit piston de freinage, et/ou au moins un desdits troisième et quatrième joints d'étanchéité est situé dans un logement ménagé dans ledit deuxième tronçon dudit piston de freinage.

11. Système selon l'une quelconque des revendications 1 à 10, **caractérisé en ce qu'**il comporte au moins un premier segment de guidage (36) disposé entre ledit premier tronçon (21) et ledit corps (7), et logé dans une cavité (37) ménagée dans ledit premier tronçon ou dans ledit corps ; et au moins un deuxième segment de guidage (38) disposé entre ledit deuxième tronçon (22) et ledit corps (7), et logé dans une cavité (39) ménagée dans ledit deuxième tronçon ou dans ledit corps.

12. Système selon l'une quelconque des revendications 1 à 11, **caractérisé en ce que** ledit corps (7) est pourvu d'un unique conduit d'alimentation (18) débouchant dans ladite chambre de pression (17), et ledit système de freinage (1) comporte en outre une première source d'agent de pression hydraulique (55) et une seconde source d'agent de pression hydraulique (57) qui sont configurées chacune pour alimenter ladite chambre de pression (17) par l'intermédiaire dudit conduit d'alimentation (18).

13. Système selon la revendication 12, **caractérisé en ce qu'**il comporte en outre un réseau d'alimentation (3) en première et deuxième sources d'agent de pression hydraulique (55, 57), comportant un unique circuit de distribution (62) et une unique conduite de distribution (4) raccordée par une première extrémité audit circuit de distribution (62), et par une deuxième extrémité, opposée à ladite une première extrémité, audit conduit d'alimentation (18) dudit corps (7) ; ledit réseau d'alimentation (3) comportant en outre une branche primaire (64) configurée pour faire cheminer un agent de pression hydraulique provenant de ladite première source d'agent de pression (55) et pourvue d'un dispositif de régulation de pression (65), un premier dispositif de distribution hydraulique (67) disposé dans ledit circuit de distribution (62) et raccordé à ladite branche primaire (64), une branche secondaire (69) configurée pour faire cheminer un agent de pression hydraulique ladite deuxième source d'agent de pression (57), un deuxième dispositif de distribution hydraulique (70) disposé dans ledit circuit de distribution (62) et raccordé à ladite branche secondaire (69) ; avec ledit premier dispositif de distribution hydraulique (67) qui est disposé entre ledit deuxième dispositif de distribution hydraulique (70) et ledit dispositif de régulation de pression (65).

14. Système selon la revendication 13, **caractérisé en ce que** lesdits premier et deuxième dispositifs de distribution hydrauliques (67, 70) sont formés chacun par un distributeur pourvu de trois orifices et d'un tiroir à deux positions qui est commandé électriquement par un actionneur.

15. Système selon l'une des revendications 13 et 14, **caractérisé en ce que** ladite branche principale (64) et/ou ladite branche secondaire (69) sont alimentées chacune en agent de pression hydraulique par un accumulateur hydraulique ou par une pompe hydraulique.

## Patentansprüche

1. Schienenbremssystem für Schienenfahrzeuge mit Bremsorganen (6) mit zumindest einem Belag oder zumindest einer Sohle, enthaltend ein Bremsgestänge (5), das dazu ausgelegt ist, auf zumindest ein Bremsorgan (6) einzuwirken, und eine Bremsvorrichtung (2), die mit einem Körper (7) und einem Betätigungsglied versehen ist, das bezüglich des Körpers (7) verstellbar ist, um auf das Bremsgestänge (5) einzuwirken; wobei das Betätigungsglied einen einzelnen Bremskolben (8) enthält, der einen ersten Abschnitt (21) mit einem ersten Querschnitt und einen zweiten Abschnitt (22) mit einem zweiten Querschnitt aufweist, der größer als der erste Querschnitt ist, wobei der Bremskolben (8) mit dem Körper (7) eine einzelne Druckkammer (17) begrenzt, die dazu ausgelegt ist, über zumindest eine Druckmittelquelle (55, 57) versorgt zu werden, um den Bremskolben (8) in eine Ruheposition zu bringen, in der das Bremsgestänge (5) keine Kraft auf das zumindest eine Bremsorgan (6) ausübt, wodurch die Bremsvorrichtung (2) nicht betätigt wird; wobei das Schienenbremssystem (1) ferner eine erste Dichtung (28) aufweist, die zwischen dem ersten Abschnitt (21) des Bremskolbens (8) und dem Körper (7) aufgenommen ist;
wobei das Schienenbremssystem (1) **dadurch gekennzeichnet ist, dass** es eine zweite Dichtung (30) enthält, die von der ersten Dichtung (28) verschieden ist und auch zwischen dem ersten Abschnitt (21) des Bremskolbens (8) und dem Körper (7) aufgenommen ist, sowie eine dritte Dichtung (32), die zwischen dem zweiten Abschnitt (22) des Bremskolbens (8) und dem Körper (7) aufgenommen ist, und eine vierte Dichtung (34), die von der dritten Dichtung (32) verschieden ist und auch zwischen dem zweiten Abschnitt (22) des Bremskolbens (8) und dem Körper (7) aufgenommen ist; wobei die erste und die dritte Dichtung (28, 32) dazu ausgelegt sind, eine Primärabdichtung der Druckkammer (17) zu bilden und die zweite und die vierte Dichtung (30, 34) dazu ausgelegt sind, eine Sekundärabdichtung der Druckkammer (17) zu bilden.

2. System nach Anspruch 1, **dadurch gekennzeichnet, dass** die Bremsvorrichtung (2) ferner mit einem Federglied (11) versehen ist, das in einer in dem Körper (7) ausgeführten Vertiefung (12) aufgenommen ist, sowie mit einem Abstützflansch (13), der mechanisch zugleich dem Federglied (11) und dem Bremskolben (8) zugeordnet ist; wobei das Federglied (11) dazu ausgelegt ist, ohne Beaufschlagung von außen und über den Abstützflansch (13) den Bremskolben (8) in eine Bremsposition zu bringen, in welcher das Bremsgestänge (5) eine Kraft auf das zumindest eine Bremsorgan (6) ausübt, wodurch die Bremsvorrichtung (2) betätigt wird.

3. System nach einem der Ansprüche 1 und 2, **dadurch gekennzeichnet, dass** der erste Abschnitt (21) des Bremskolbens (8) sich im Wesentlichen longitudinal in dem Körper (7) erstreckt und mechanisch dem Bremsgestänge (5) zugeordnet ist, und der Bremskolben (8) ferner einen Verbindungsabschnitt (23) enthält, welcher den ersten Abschnitt (21) mit dem zweiten Abschnitt (22) verbindet, welcher zweite Abschnitt (22) sich im Wesentlichen dem ersten Abschnitt (21) gegenüberliegend erstreckt, so dass eine ringförmige Nut (24) zwischen dem ersten Abschnitt (21) und dem zweiten Abschnitt (22) gebildet ist, wobei die ringförmige Nut (24) einen Nutgrund (25) hat, der von dem Verbindungsabschnitt (23) gebildet ist.

4. System nach Anspruch 3, **dadurch gekennzeichnet, dass** zumindest eine aus erster und zweiter Dichtung (28, 30) im Bereich der ringförmigen Nut (24) und/oder dem zweiten Abschnitt (22) gegenüberliegend aufgenommen ist.

5. System nach Anspruch 4, **dadurch gekennzeichnet, dass** die Bremsvorrichtung (2) so ausgelegt ist, dass zumindest eine aus dritter und vierter Dichtung (32, 34) sich bezüglich zumindest einer aus erster und zweiter Dichtung (28, 30), die im Bereich der ringförmigen Nut (24) aufgenommen ist, zumindest teilweise in Überlagerung befindet, zumindest dann, wenn der Bremskolben (8) in Ruheposition ist.

6. System nach Anspruch 5, **dadurch gekennzeichnet, dass** die erste und die dritte Dichtung (28, 32) so angeordnet sind, dass sie in Bezug aufeinander zumindest teilweise in Überlagerung sind, und die zweite und die vierte Dichtung (30, 34) so angeordnet sind, dass sie longitudinal zueinander versetzt sind.

7. System nach Anspruch 6, **dadurch gekennzeichnet, dass** die vierte Dichtung (34) an die dritte Dichtung (32) angrenzt und auf einer ersten Seite aufgenommen ist, die zum Verbindungsabschnitt (23) hin weist, während die zweite Dichtung (30) an die erste Dichtung (28) angrenzt und auf einer der ersten Seite entgegengesetzten zweiten Seite aufgenommen ist.

8. System nach einem der Ansprüche 1 bis 7, **dadurch gekennzeichnet, dass** die erste und die dritte Dichtung (28, 32) ähnlich sind und einer ersten Gruppe von Dichtungen angehören, die zweite und die vierte Dichtung (30, 34) ähnlich sind und einer zweiten Gruppe von Dichtungen angehören, die von der ersten Gruppe von Dichtungen verschieden oder zu dieser identisch ist, wobei die erste und die zweite Gruppe von Dichtungen vorzugsweise aus Verbunddichtungen, Lippendichtungen, O-Ringen, Quad-Ring-Dichtungen und sogenannten Kompaktdichtungen ausgewählt sind.

9. System nach einem der Ansprüche 1 bis 8, **dadurch gekennzeichnet, dass** zumindest eine aus erster, zweiter, dritter und vierter Dichtung (28, 30, 32, 34) in einer Aufnahmeausnehmung (29, 31, 33, 35) liegt, die in dem Körper (7) der Bremsvorrichtung (2) ausgebildet ist.

10. System nach einem der Ansprüche 1 bis 9, **dadurch gekennzeichnet, dass** zumindest eine aus erster und zweiter Dichtung in einer Aufnahmeausnehmung liegt, die in dem ersten Abschnitt des Bremskolbens ausgebildet ist, und/oder zumindest eine aus dritter und vierter Dichtung in einer Aufnahmeausnehmung liegt, die in dem zweiten Abschnitt des Bremskolbens ausgebildet ist.

11. System nach einem der Ansprüche 1 bis 10, **dadurch gekennzeichnet, dass** es zumindest ein erstes Führungssegment (36) enthält, das zwischen dem ersten Abschnitt (21) und dem Körper (7) angeordnet ist und in einer Vertiefung (37) aufgenommen ist, die in dem ersten Abschnitt bzw. in dem Körper ausgebildet ist; sowie zumindest ein zweites Führungssegment (38), das zwischen dem zweiten Abschnitt (22) und dem Körper (7) angeordnet ist und in einer Vertiefung (39) aufgenommen ist, die in dem zweiten Abschnitt bzw. in dem Körper ausgebildet ist.

12. System nach einem der Ansprüche 1 bis 11, **dadurch gekennzeichnet, dass** der Körper (7) mit einer einzelnen Versorgungsleitung (18) versehen ist, die in die Druckkammer (17) mündet, und das Bremssystem (1) ferner eine erste hydraulische Druckmittelquelle (55) und eine zweite hydraulische Druckmittelquelle (57) enthält, die jeweils dazu ausgelegt sind, die Druckkammer (17) über die Versorgungsleitung (18) zu versorgen.

13. System nach Anspruch 12, **dadurch gekennzeichnet, dass** es ferner ein Versorgungsnetz (3) zur Versorgung mit der ersten und der zweiten hydraulischen Druckmittelquelle (55, 57) enthält, das einen einzigen Verteilkreis (62) und eine einzige Verteilleitung (4) enthält, die über ein erstes Ende mit dem Verteilkreis (62) und über ein dem ersten Ende entgegengesetztes zweites Ende mit der Versorgungsleitung (18) des Körpers (7) verbunden ist; wobei das Versorgungsnetz (3) ferner einen Primärzweig (64) enthält, der dazu ausgelegt ist, ein von der ersten Druckmittelquelle (55) stammendes hydraulisches Druckmittel zu fördern, und mit einer Druckeinstellvorrichtung (65) versehen ist, sowie eine erste hydraulische Verteilvorrichtung (67), die in dem Verteilkreis (62) angeordnet und mit dem Primärzweig (64) verbunden ist, sowie einen Sekundärzweig (69), der dazu ausgelegt ist, ein von der zweiten Druckmittelquelle (57) stammendes hydraulisches Druckmittel zu fördern, und eine zweite hydraulische Verteilvorrichtung (70), die in dem Verteilkreis (62) angeordnet und mit dem Sekundärzweig (69) verbunden ist; wobei die erste hydraulische Verteilvorrichtung (67) zwischen der zweiten hydraulischen Verteilvorrichtung (70) und der Druckeinstellvorrichtung (65) angeordnet ist.

14. System nach Anspruch 13, **dadurch gekennzeichnet, dass** die erste und die zweite hydraulische Verteilvorrichtung (67, 70) jeweils aus einem Verteiler gebildet sind, der mit drei Öffnungen und einem Schieber mit zwei Stellungen versehen ist, der elektrisch über ein Betätigungsglied gesteuert wird.

15. System nach einem der Ansprüche 13 und 14, **dadurch gekennzeichnet, dass** der Hauptzweig (64) und/oder der Sekundärzweig (69) jeweils über einen Hydraulikspeicher bzw. über eine Hydraulikpumpe mit hydraulischem Druckmittel versorgt werden.

## Claims

1. A rail vehicle braking system for a rail vehicle with braking members (6) having at least one lining or at least one block, comprising a braking linkage (5) configured to act on at least one said braking member (6), and a braking device (2) provided with a body (7) and an actuator which is movable relative to said body (7) to act on said braking linkage (5); said actuator comprises a single braking piston (8) having a first section (21) having a first cross-section and a second section (22) having a second cross-section greater than said first cross-section, said braking piston (8) delimiting with said body (7) a single pressure chamber (17) configured to be supplied by at least one source of pressure agent (55, 57) to put said braking piston (8) in a resting position in which said braking linkage (5) applies no force on said at least one braking member (6), whereby said braking device (2) is not applied; said rail vehicle braking system (1) further comprising a first seal (28) accommodated between said first section (21) of said braking piston (8) and said body (7); said rail vehicle braking system (1) being **characterized in that** it comprises a second seal (30), distinct from said first seal (28), also accommodated between said first section (21) of said braking piston (8) and said body (7), a third seal (32) accommodated between said second section (22) of said braking piston (8) and said body (7), and a fourth seal (34), distinct from said third seal (32), also accommodated between said second section (22) of said braking piston (8) and said body (7); said first and third seals (28, 32) being configured to form primary sealing of said pressure chamber (17) and said second and fourth seals (30, 34) being configured to form secondary sealing of said pressure chamber (17).

2. A system according to claim 1, **characterized in that** said braking device (2) is furthermore provided with a spring member (11) accommodated in a cavity (12) formed in said body (7) and a bearing flange (13) mechanically connected both to said spring member (11) and to said braking piston (8); said spring member (11) being configured for placing, without being acted upon externally and via said bearing flange (13), said braking piston (8) in a braking position in which said braking linkage (5) applies a force on said at least one braking member (6), whereby said braking device (2) is applied.

3. A system according to one of claims 1 and 2, **characterized in that** said first portion (21) of said braking piston (8) extends substantially longitudinally in said body (7) and is mechanically connected to said braking linkage (5), and said braking piston (8) further comprises a joining portion (23) connecting said first section (21) to said second section (22), which second section (22) extends substantially opposite said first section (21) so as to form an annular groove (24) between said first section (21) and said second section (22), said annular groove (24) having a bottom (25) formed by said joining portion (23).

4. A system according to claim 3, **characterized in that** at least one of said first and second seals (28, 30) is accommodated at the location of the annular groove (24) and/or opposite said second section (22).

5. A system according to claim 4, **characterized in that** said braking device (2) is configured such that at least one of said third and fourth seals (32, 34) is located at least partially superposed relative to said at least one of the first and second seals (28, 30) which is accommodated at the location of the annular groove (24), at least when said braking piston (8) is in resting position.

6. A system according to claim 5, **characterized in that** said first and third seals (28, 32) are arranged so as to be at least partially superposed relative to each other and said second and fourth seals (30, 34) are arranged so as to be offset longitudinally relative to each other.

7. A system according to claim 6, **characterized in that** said fourth seal (34) is adjacent said third seal (32) and accommodated with a first side directed towards said joining portion (23), whereas said second seal (30) is adjacent said first seal (28) and accommodated with a second side away from said first side.

8. A system according to any one of claims 1 to 7, **characterized in that** said first and third seals (28, 32) are similar and belong to a first family of seals, said second and fourth seals (30, 34) are similar and belong to a second family of seals, distinct from or identical to said first family of seals, said first and second families of seals preferably being chosen from the families of composite seals, lip seals, 'O'-rings, lobed seals and so-called compact seals.

9. A system according to any one of claims 1 to 8, **characterized in that** at least one of said first, second, third and fourth seals (28, 30, 32, 34) is situated in an accommodation (29, 31, 33, 35) formed in said body (7) of said braking device (2).

10. A system according to any one of claims 1 to 9, **characterized in that** at least one of said first and second seals is situated in an accommodation formed in said first section of said braking piston, and/or at least one of said third and fourth seals is situated in an accommodation formed in said second section of said braking piston.

11. A system according to any one of claims 1 to 10, **characterized in that** it comprises at least one first guide segment (36) disposed between said first section (21) and said body (7), and accommodated in a cavity (37) formed in said first section or in said body; and at least one second guide segment (38) disposed between said second section (22) and said body (7), and accommodated in a cavity (39) formed in said second section or in said body.

12. A system according to any one of claims 1 to 11, **characterized in that** said body (7) is provided with a single supply pipe (18) opening into said pressure chamber (17), and said braking system (1) further comprises a first source of hydraulic pressure agent (55) and a second source of hydraulic pressure agent (57) which are each configured to supply said pressure chamber (17) via said supply pipe (18).

13. A system according to claim 12, **characterized in that** it further comprises a supply network (3) for first and second sources of hydraulic pressure agent (55, 57), comprising a single distribution circuit (62) and a single distribution pipe (4) which is connected by a first end to said distribution circuit (62), and by a second end, which is an opposite end to said first end, to said supply pipe (18) of said body (7); said supply network (3) further comprising a primary branch (64) configured for conveying a hydraulic pressure agent coming from said first source of pressure agent (55) and provided with a pressure regulating device (65), a first hydraulic distribution device (67) disposed in said distribution circuit (62) and connected to said primary branch (64), a secondary branch (69) configured for conveying a hydraulic pressure agent from said second source of pressure agent (57), a second hydraulic distribution device (70) disposed in said distribution circuit (62) and connected to said secondary branch (69); said first hydraulic distribution device (67) being disposed between said second hydraulic distribution device (70) and said pressure regulating device (65).

14. A system according to claim 13, **characterized in that** said first and second hydraulic distribution devices (67, 70) are each formed by a distributor provided with three apertures and a two-position slide which is electrically controlled by an actuator.

15. A system according to one of claims 13 and 14, **characterized in that** said main branch (64) and/or said secondary branch (69) are each supplied with hydraulic pressure agent by a hydraulic accumulator or by a hydraulic pump.
